**Europäisches Patentamt**

**European Patent Office**

**Office européen des brevets**

(19)

(11) Numéro de publication : **0 570 291 A1**

(12) # DEMANDE DE BREVET EUROPEEN

(21) Numéro de dépôt : **93401229.5**

(22) Date de dépôt : **13.05.93**

(51) Int. Cl.⁵ : **B60Q 1/115**

(30) Priorité : **15.05.92 FR 9205929**

(43) Date de publication de la demande :
**18.11.93 Bulletin 93/46**

(84) Etats contractants désignés :
**DE ES GB IT**

(71) Demandeur : **VALEO VISION**
**34, rue Saint-André**
**F-93000 Bobigny (FR)**

(72) Inventeur : **Marois, Paul**
**21, rue Poliveau**
**F-75005 Paris (FR)**

(74) Mandataire : **Martin, Jean-Jacques et al**
**Cabinet REGIMBEAU 26, Avenue Kléber**
**F-75116 Paris (FR)**

(54) **Correcteur automatique de l'orientation des projecteurs lors des variations d'assiette d'un véhicule.**

(57) Un dispositif pour la correction automatique de l'orientation d'au moins un projecteur lors des variations d'assiette d'un véhicule comprend au moins deux capteurs d'éclairement (CP1, CP2) solidaires du projecteur et agencés pour détecter la luminance de la route dans le champ d'éclairement du projecteur selon deux directions par rapport à une direction de référence dudit projecteur, un actuateur pour modifier l'inclinaison du projecteur, et des moyens de traitement pour commander l'actuateur en fonction de signaux engendrés par les capteurs.

Selon l'invention, les moyens de traitement comprennent des moyens d'asservissement de gain (A1, C1, CMP) commandés par le signal fourni par un premier capteur (CP1), lesdits moyens d'asservissement de gain commandant le gain d'un circuit à gain variable (A2, C2) recevant le signal issu du deuxième capteur, de telle sorte que ledit gain soit d'autant plus élevé que le signal issu du deuxième capteur est faible.

EP 0 570 291 A1

La présente invention a trait d'une façon générale aux dispositifs de correction de l'orientation en site des projecteurs d'un véhicule automobile, et concerne plus particulièrement un correcteur électronique perfectionné.

On connaît déjà par le document EP-A-0 186 571 au nom de la Demanderesse un dispositif de correction qui comprend principalement, solidaires du réflecteur d'un projecteur, au moins deux cellules photoélectriques visant la route à deux distances différentes en avant du véhicule. Les variations de luminance de la route éclairée par le projecteur selon les deux directions de visée des cellules respectives interviennent dans des moyens de traitement afin de corriger l'orientation des projecteurs en fonction des variations d'assiette du véhicule. Dans une forme de réalisation, ces moyens de traitement opèrent une division mathématique entre les valeurs de courant instantanées traversant les cellules, et le résultat de cette division est comparé avec une valeur de seuil.

Un tel dispositif connu présente cependant l'inconvénient d'être extrêmement sensible aux variations de la nature du revêtement routier, du coefficient de transmission de la glace du projecteur, de la tension d'alimentation de la lampe ainsi que des conditions climatiques (pluie rendant la chaussée luisante, brouillard, etc).

Plus précisément, ces paramètres se combinent pour affecter à la luminance mesurée par chaque cellule des coefficients multiplicatifs aléatoires; et en pratique, un correcteur connu tel que défini ci-dessus n'opère efficacement que dans des conditions parfaites de revêtement routier, de propreté de la glace, de météorologie, etc...

La présente invention a pour objet principal de pallier cet inconvénient.

Elle concerne à cet effet un dispositif pour la correction automatique de l'orientation d'au moins un projecteur de véhicule, lors des variations d'assiette dudit véhicule, du type comprenant au moins deux capteurs d'éclairement intégrés au projecteur et solidaires en mouvement de ce dernier, les deux capteurs étant agencés pour détecter la luminance de la route dans le champ d'éclairement du projecteur selon deux directions faisant deux angles prédéterminés par rapport à une direction de référence dudit projecteur, un actuateur apte à faire varier l'inclinaison du projecteur par rapport au véhicule, et des moyens de traitement propres à élaborer un signal de commande de l'actuateur en fonction de signaux engendrés par les capteurs et essentiellement proportionnels à la quantité de lumière qu'ils reçoivent, caractérisé en ce que les moyens de traitement comprennent des moyens d'asservissement de gain commandés par le signal fourni par un premier capteur, lesdits moyens d'asservissement de gain commandant le gain d'un circuit à gain variable recevant le signal issu du deuxième capteur, de telle sorte que ledit gain soit d'autant plus élevé que le signal issu du deuxième capteur est faible.

Préférentiellement, les moyens d'asservissement de gain comprennent un premier circuit intégrateur du signal fourni par le premier capteur et un moyen de comparaison de la tension de sortie du premier circuit intégrateur avec une tension de référence, avantageusement réglable, tandis que le circuit recevant le signal issu du deuxième capteur comprend un deuxième circuit intégrateur et la sortie dudit moyen de comparaison ajuste la durée d'intégration du deuxième circuit intégrateur.

Selon une variante, la tension de référence peut prendre différentes valeurs associées à une pluralité de couples d'une valeur d'inclinaison du projecteur et d'une valeur prise par le signal de sortie du deuxième circuit intégrateur lorsque ladite valeur d'inclinaison du projecteur est sa valeur d'inclinaison réelle.

Dans un mode de réalisation particulier, chaque circuit intégrateur comprend un moyen de remise à zéro commandé par une borne d'entrée de remise à zéro du dispositif, et l'ajustement de la durée d'intégration du deuxième circuit intégrateur est effectué par commande par le moyen de comparaison d'un moyen interrupteur prévu entre le deuxième capteur et le deuxième circuit intégrateur.

Les moyens de traitement peuvent comprendre en outre un moyen pour déterminer, à partir du signal fourni par le circuit recevant le signal issu du deuxième capteur, une valeur d'inclinaison absolue du projecteur.

Enfin, dans une variante de réalisation, les moyens de traitement comprennent un moyen pour effectuer un balayage de l'inclinaison du projecteur, un moyen pour établir le rapport entre une pente d'évolution d'un signal fourni par l'un des capteurs au cours dudit balayage et une valeur dudit signal, ainsi qu'un moyen pour déduire dudit rapport l'angle d'inclinaison du projecteur.

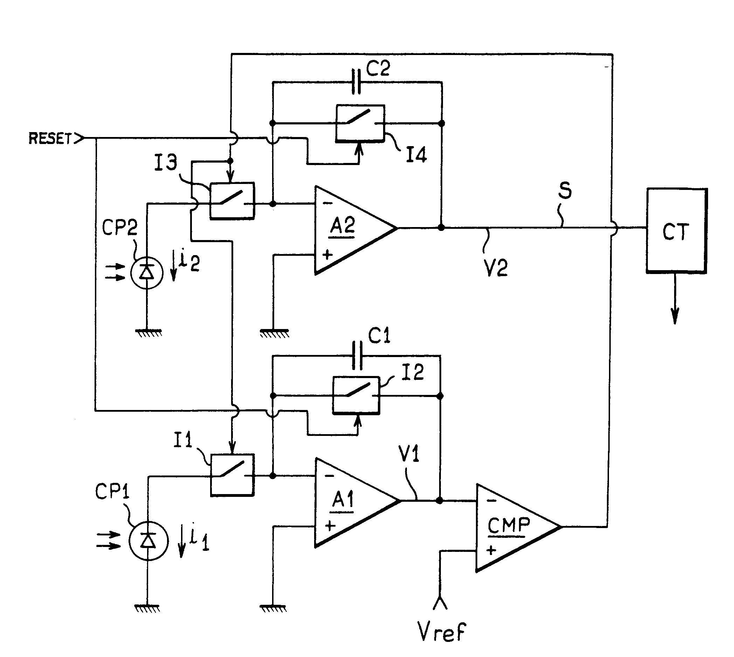

D'autres aspects, buts et avantages de la présente invention apparaîtront mieux à la lecture de la description détaillée suivante d'un mode de réalisation préférée de celle-ci, donnée à titre d'exemple et faite en référence au dessin annexé, sur lequel la figure unique est un schéma de principe d'un circuit électronique faisant partie d'un dispositif de correction selon l'invention.

Pour davantage de détails sur les composants essentiels d'un dispositif de correction, on se reportera au document EP-A-0 186 571, dont le contenu est incorporé à la présente description par référence.

En référence au dessin, on a représenté un circuit qui comprend un premier amplificateur opérationnel A1 est prévu dont l'entrée inverseuse est reliée à la borne d'entrée de courant d'une première cellule photoélectrique CP1 via un interrupteur commandé I1. La cellule CP1 vise la route selon une première direction de visée par rapport à une direction de référence (axe optique) d'un projecteur associé. La borne de sortie de courant de la cellule CP1 est à la masse. L'entrée non-inverseuse de A1 est à la masse, et l'on trouve entre son entrée inverseuse et sa sortie, en parallèle, un condensateur C1 et un interrupteur commandé I1.

La sortie de A1 est reliée à l'entrée négative d'un comparateur CMP. Sur l'entrée positive de CMP est appliquée une tension de référence notée Vref, fixe ou variable comme on le verra plus loin.

Il est en outre prévu un second amplificateur opérationnel A2 dont l'entrée inverseuse est reliée par l'intermédiaire d'un interrupteur commandé I3 à une borne d'entrée de courant d'une deuxième cellule photoélectrique CP2 visant la route selon une deuxième direction de visée différente de la première, visant en l'espèce un point de la route plus éloigné du véhicule. La borne de sortie de courant de CP2 est à la masse. L'entrée non-inverseuse de A2 est reliée à la masse. Entre l'entrée inverseuse de A2 et sa sortie sont branchés en parallèle un condensateur C2 et un interrupteur commandé I4. La sortie de A2 est en outre reliée à une borne de sortie de commande S du circuit.

Les condensateurs C1 et C2 ont préférentiellement les mêmes valeurs de capacité.

La sortie du circuit CMP commande l'état ouvert ou fermé des interrupteurs I1 et I3.

Enfin le circuit comprend une borne d'entrée de rétablissement RESET qui commande l'état ouvert ou fermé des interrupteurs I2 et I4.

La sortie S reliée à la sortie de A2 attaque l'entrée d'un circuit de traitement 50, non décrit en détail, capable selon les processus classiques de commander l'inclinaison des projecteurs.

On observe que les circuits construits autour de A1 et A2 sont respectivement des intégrateurs des courants respectifs traversant les deux cellules CP1 et CP2. Ces deux intégrateurs peuvent être réarmés en fermant les interrupteurs I2 et I4 à l'aide de l'entrée RESET.

On va maintenant décrire le fonctionnement de base du circuit décrit ci-dessus.

Lorsque le projecteur associé est allumé et éclaire la route, chaque cellule CP1 et CP2 reçoit, via un système de focalisation approprié (lentille ou analogue), une quantité de lumière proportionnelle à la luminance de la route selon la direction de visée qui lui est propre.

Initialement les interrupteurs I1 à I4 sont fermés.

Lorsque les interrupteurs I2 et I4 sont ouverts, par l'application d'une tension de commande appropriée sur l'entrée RESET, alors les tensions V1 et V2 en sortie respectivement de A1 et A2 croissent, leur valeur étant représentative de l'intégration dans le temps des courants i1 et i2 circulant dans les cellules CP1 et CP2, et donc de la quantité de lumière reçue.

Lorsque V1 atteint la valeur de référence Vref, alors la sortie de CMP bascule et les interrupteurs I1 et I3 sont ouverts, pour bloquer simultanément la charge des condensateurs C1 et C2, ce qui a pour effet de figer les valeurs de tension V1 et V2.

Le circuit de traitement CT prévu en aval du circuit représenté sur la figure exploite alors la valeur de V2 présente sur la sortie S pour en déduire la valeur de l'angle d'inclinaison α du projecteur et pour effectuer une correction de l'orientation en site des projecteurs en fonction de cette valeur.

Après ces opérations, les interrupteurs I2 et I4 sont à nouveau fermés par l'entrée RESET et un nouveau cycle de mesure peut commencer.

On comprend que le circuit ci-dessus réalise un asservissement du gain de la mesure de la luminance de la route. Plus précisément, plus le courant i2 est faible, ce qui peut être dû par exemple à la nature du revêtement routier, à une atténuation de la lumière reçue par la glace du projecteur ou encore par une baisse de la tension d'alimentation de la lampe du projecteur, ou par un cumul de ces phénomènes, alors plus la durée d'intégration est longue, cette durée étant déterminée par la valeur fixe de Vref et par la valeur moyenne de i2.

Cette durée d'intégration étant également plus longue pour le circuit A2 (les deux durées d'intégrations sont identiques), le gain du circuit A2, déterminé comme le rapport entre V2 et la valeur moyenne de i2, est donc augmenté.

Inversement, lorsque la valeur de i1 augmente, le gain du circuit A2 diminue.

Ainsi l'invention permet de modifier la sensibilité du circuit de mesure en fonction des conditions extérieures, pour ainsi s'affranchir des variations desdites conditions en conservant à chaque fois une dynamique et un rapport signal-sur-bruit optimaux.

On comprend que le circuit ci-dessus fournit sur sa sortie S une information dont on peut dériver directement l'inclinaison du projecteur.

Plus précisément, dans une configuration donnée, les courants i1 et i2 varient chacun en fonction de l'inclinaison α du projecteur, selon une courbe assimilable à une équation du second degré en α, ces courbes étant notées $k.i1(\alpha)$ et $k.i2(\alpha)$, où k est une constante d'atténuation pour un environnement extérieur donné.

Le circuit décrit plus haut permet de déterminer l'inclinaison α du projecteur de la façon suivante : supposons initialement que le projecteur soit incliné selon un angle α'. et supposons en outre que, pendant l'intervalle de temps de la mesure, l'angle α' ne varie pas et les valeurs des courants i1 et i2 restent constantes.

Le circuit A1 délivre alors une tension V1 qui est égale à $k.i1(\alpha').t$, t étant le temps.

Lorsque V1 atteint Vref, soit $k.i1(\alpha').t = Vref$, on détermine le temps d'intégration Ti, qui est égal à $Vref/(k.i1(\alpha'))$.

La tension V2 est donc égale à $k.i2(\alpha').Ti$, soit :

V2 = Vref.(i2(α')/i1(α'))

Ce rapport entre les courants i1 et i2 en fonction de l'angle α évoluant selon une relation bijective avec ledit angle α, la tension V2 permet, par exemple par traitement approprié dans un microprocesseur, (appel d'une courbe mémorisée point par point, opérations mathématiques), d'obtenir l'angle α'.

Un avantage du circuit de la présente invention réside en ce qu'il peut être aisément paramétré en fonction de l'environnement du correcteur.

En particulier, par un réglage de la valeur Vref, qui peut être effectué aisément à l'aide d'un potentiomètre ajustable ou analogue, on peut appliquer à la tension V2 un coefficient multiplicatif bien choisi de façon à compenser, d'un projecteur à un autre, les différences entre la quantité de la lumière reçue par les cellules, dues par exemple à des différences d'atténuation par la glace, à des différences de sensibilité des cellules, etc...

De plus, le circuit décrit ci-dessus peut être utilisé en fixant une valeur de Vref différente pour chaque mesure de V2 effectuée. A chacune des valeurs successives $Vref_i$ de Vref est associée, par exemple dans une mémoire du circuit de traitement CT, une valeur $V_i$ que devrait prendre la tension V2 si le projecteur présente effectivement un angle d'inclinaison $\alpha_i$. Les différentes valeurs $Vref_i$ sont successivement balayées jusqu'à ce que la valeur de V2 corresponde effectivement à une valeur $V_i$, ce qui détermine l'angle courant $\alpha_i$ d'inclinaison du projecteur. Là encore, on s'affranchit des variations de l'environnement du dispositif, en lui conservant une sensibilité maximale.

Alternativement, la valeur $Vref_i$ correspondant à l'angle d'inclinaison $\alpha_i$ peut être recherchée par approches successives.

En outre, une modification automatique de la valeur de Vref peut être envisagée pour modifier globalement la durée d'intégration Ti, et notamment pour augmenter cette durée lorsque l'état de la route est tel que la quantité de lumière reçue varie extrêmement rapidement. Les circuits A1 et A2 effectuent de la sorte un filtrage des signaux fournis par les deux cellules photoélectriques, en vue d'obtenir une série de mesures cohérentes les unes avec les autres.

Selon une autre variante, on peut prévoir qu'un microprocesseur incorporé au correcteur confronte à chaque mesure la valeur effective de V2 et la durée d'intégration Ti, qui peut être aisément déterminée à l'aide d'un compteur. Cette confrontation permet d'éliminer les valeurs mesurées qui ne sont pas significatives, notamment dans le cas où un obstacle se présente sur la route et que le courant i2 croît brusquement.

Selon une autre variante encore, une des deux cellules CP1 et CP2, de préférence celle qui vise dans la direction la plus proche du véhicule, peut être utilisée pour déterminer l'inclinaison du projecteur selon une autre méthode. En particulier, si l'on applique au dispositif de commande de l'orientation du projecteur un tension de commande périodique effectuant un balayage de faible amplitude de ladite orientation, on peut déterminer au cours de ce balayage la pente P de la courbe de la tension V en sortie de l'amplificateur opérationnel correspondant. Cette tension est établie avec une durée d'intégration fixe, pour être proportionnelle à la quantité de lumière effectivement reçue.

Dans ce cas, étant donné que la courbe de la lumière reçue en fonction de l'angle d'inclinaison α est une courbe non linéaire, dont la pente évolue de façon monotone, le rapport P/V entre la valeur de cette pente et la valeur de la tension permet, par des moyens de traitement appropriés, de déterminer l'angle moyen α d'inclinaison du projecteur. On notera que le fait de diviser la valeur de cette pente P par la valeur de la tension permet de s'affranchir de la nature du sol et de l'intensité lumineuse sur la route au point de visée.

Bien entendu, la présente invention n'est nullement limitée à la forme de réalisation décrite ci-dessus et représentée sur les dessins, mais l'homme de l'art saura y apporter toute variante ou modification conforme à son esprit.

## Revendications

1. Dispositif pour la correction automatique de l'orientation d'au moins un projecteur de véhicule, lors des variations d'assiette dudit véhicule, du type comprenant au moins deux capteurs d'éclairement (CP1, CP2) intégrés au projecteur et solidaires en mouvement de ce dernier, les deux capteurs étant agencés pour détecter la luminance de la route dans le champ d'éclairement du projecteur selon deux directions faisant deux angles prédéterminés par rapport à une direction de référence dudit projecteur, un actuateur apte à faire varier l'inclinaison du projecteur par rapport au véhicule, et des moyens de traitement propres à élaborer un signal de commande de l'actuateur en fonction de signaux engendrés par les capteurs et essentiellement proportionnels à la quantité de lumière qu'ils reçoivent, caractérisé en ce que les moyens de traitement comprennent des moyens d'asservissement de gain (A1, C1, CMP) commandés par le signal fourni par un premier capteur (CP1), lesdits moyens d'asservissement de gain commandant le gain d'un circuit à gain variable (A2, C2) recevant le signal issu du deuxième capteur, de telle sorte que ledit gain soit d'autant plus élevé que le signal issu du deuxième capteur est faible.

2. Dispositif selon la revendication 1, caractérisé en ce que les moyens d'asservissement de gain comprennent un premier circuit intégrateur (A1, C1) du signal fourni par le premier capteur et un moyen de comparaison (CMP) de la tension de sortie du premier circuit intégrateur avec une tension de référence (Vref), en ce que le circuit recevant le signal issu du deuxième capteur comprend un deuxième circuit intégrateur (A2, C2), et en ce que la sortie dudit moyen de comparaison ajuste la durée d'intégration (Ti) du deuxième circuit intégrateur.

3. Dispositif selon la revendication 2, caractérisé en ce que la tension de référence (Vref) est réglable.

4. Dispositif selon la revendication 3, caractérisé en ce que la tension de référence (Vref) peut prendre différentes valeurs (Vref$_i$) associées à une pluralité de couples ($\alpha_i$, V$_i$) d'une valeur d'inclinaison du projecteur et d'une valeur prise par le signal de sortie du deuxième circuit intégrateur (V2) lorsque ladite valeur d'inclinaison du projecteur est sa valeur d'inclinaison réelle.

5. Dispositif selon l'une des revendications 2 à 4, caractérisé en ce que chaque circuit intégrateur (A1, C1; A2, C2) comprend un moyen de remise à zéro (I2, I4) commandé par une borne d'entrée de remise à zéro (RESET) du dispositif.

6. Dispositif selon l'une des revendications 2 à 5, caractérisé en ce que l'ajustement de la durée d'intégration du deuxième circuit intégrateur est effectué par commande, à l'aide du moyen de comparaison (CMP), d'un moyen interrupteur (I3) prévu entre le deuxième capteur (CP2) et le deuxième circuit intégrateur (A2, C2).

7. Dispositif selon l'une des revendications 1 à 6, caractérisé en ce que les moyens de traitement (CT) comprennent en outre un moyen pour déterminer, à partir du signal (V2) fourni par le circuit recevant le signal issu du deuxième capteur, une valeur d'inclinaison absolue ($\alpha$) du projecteur.

8. Dispositif selon l'une des revendications 1 à 6, caractérisé en ce que les moyens de traitement (CT) comprennent un moyen pour effectuer un balayage de l'inclinaison ($\alpha$) du projecteur, et un moyen pour établir le rapport entre une pente (P) d'évolution d'un signal fourni par l'un des capteurs au cours dudit balayege et une valeur (V) dudit signal, ainsi qu'un moyen pour déduire dudit rapport l'angle d'inclinaison ($\alpha$) du projecteur.

Office européen
des brevets

**RAPPORT DE RECHERCHE EUROPEENNE**

Numero de la demande

EP    93 40 1229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 186 571 (CIBIE PROJECTEURS) --- | | B60Q1/115 |
| A | FR-A-2 217 944 (ROBERT BOSCH GMBH) ----- | | |

DOMAINES TECHNIQUES RECHERCHES (Int. Cl.5)

B60Q

Le présent rapport a été établi pour toutes les revendications

| Lieu de la recherche | Date d'achèvement de la recherche | Examinateur |
|---|---|---|
| LA HAYE | 16 AOUT 1993 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)